(19) Europäisches Patentamt / European Patent Office / Office européen des brevets

(11) **EP 3 388 498 B1**

(12) **EUROPEAN PATENT SPECIFICATION**

(45) Date of publication and mention
of the grant of the patent:
**03.11.2021 Bulletin 2021/44**

(21) Application number: **16873360.8**

(22) Date of filing: **08.12.2016**

(51) Int Cl.:
*C10G 3/00* *(2006.01)*          *C10L 1/02* *(2006.01)*
*F23G 5/027* *(2006.01)*       *F23G 5/033* *(2006.01)*
*B09B 3/00* *(2006.01)*          *C10G 1/00* *(2006.01)*

(86) International application number:
**PCT/KR2016/014382**

(87) International publication number:
**WO 2017/099495 (15.06.2017 Gazette 2017/24)**

(54) **METHOD FOR PRODUCING BIO-OIL USING TORREFACTION AND FAST PYROLYSIS PROCESS**

VERFAHREN ZUR HERSTELLUNG VON BIOÖL MIT TORREFIZIERUNG UND SCHNELLEM PYROLYSEVERFAHREN

PROCÉDÉ DE PRODUCTION DE BIO-HUILE À L'AIDE D'UN PROCÉDÉ DE TORRÉFACTION ET DE PYROLYSE RAPIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2015 KR 20150174384**

(43) Date of publication of application:
**17.10.2018 Bulletin 2018/42**

(73) Proprietor: **University Industry Foundation, Yonsei University Wonju Campus**
**Gangwon-do 26493 (KR)**

(72) Inventors:
• **CHOI, Hang Seok**
**Wonju-si**
**Gangwon-do 26458 (KR)**
• **PARK, Hoon Chae**
**Wonju-si**
**Gangwon-do 26424 (KR)**

(74) Representative: **Ström & Gulliksson AB**
**P.O. Box 4188**
**203 13 Malmö (SE)**

(56) References cited:
EP-A1- 2 589 648          WO-A1-95/03374
WO-A2-2012/058218       KR-A- 20130 113 832
KR-A- 20140 068 691      KR-A- 20140 068 691
KR-A- 20150 053 462      KR-B1- 101 098 785
US-A1- 2010 162 625      US-A1- 2010 223 839
US-A1- 2012 108 860

**Description**

[Technical Field]

The present invention relates to a bio-oil production method using torrefaction and rapid pyrolysis processes.

[Background Art]

Recently, interests in the development of new alternative fuels emitting a smaller amount of carbon dioxide, instead of fossil fuels, are rapidly growing to follow the increasing demand for alternative energy or non-petroleum energy sources by the results of depleting fossil fuels and ever-increasing greenhouse effects. In addition, international regulations are being globally strengthened to cope with climate changes, and also Korean government is pushing forward both the greenhouse gas energy target management system and RPS (Renewable Energy Portfolio Standard) system in order to establish the basic standards on green growth and accomplish the national greenhouse gas reduction goals respectively.

Hence, many researches for utilizing biomass as an alternative energy source have been continuously carried out, and also, domestic and overseas industries are actively promoting the use of solid biomass energy sources which are more competitive in terms of production versus investment cost as compared to other energy sources such as solar, wind, or geothermal heat, as a primary alternative energy source.

It has been difficult to introduce biomass fuels produced from agricultural/forestry by-products into rapid pyrolysis reactors because of their physical properties and a large amount of moisture the fuel itself contains. The biomass fuels produced even through the rapid pyrolysis show limited fuel performance rates due to their relatively high moisture content rates and low heating values.

Accordingly, there is a strong need available for a new method for stably producing environmentally friendly biomass fuels having a high energy density.

KR20130097834, US2010/223839, WO95/03374, US2010/162625, KR20140068691 relate to systems and processes for producing liquid fuels from biomass.

[Summary of Invention]

[Technical Problem]

The present invention provides a new method of producing a bio-oil having a low moisture content rate and a high heating value, which includes torrefying atarget raw material such as biomass to increase the density of energy, pulverizing the target raw material torrefied into a fine powder form, and subjecting the target raw material pulverized and torrefied to rapid pyrolysis.

[Solution to Problem]

In order to accomplish the above object, the present invention provides a system and a method as disclosed in appended claims 1 and 2.

In an exemplary embodiment, a bio-oil which is produced according to the method and has a moisture content rate of 20% by weight or less is provided.

In an exemplary embodiment, a bio-oil which is produced according to the method and has a heating value of 4,000 kcal/kg or more is provided.

[Advantageous Effects of Invention]

According to the present invention, it is possible to remove moisture and volatile substances contained in the target raw material by subjecting a target raw material such as biomass to a torrefaction process and thus to convert the target raw material such as biomass from a hydrophilic state to a hydrophobic state, and as a result, the energy density of the target raw material such as biomass increases.

According to the present invention, the torrefied raw material can be pulverized into a fine powder form, thus the heat transfer surface area of the pulverized and torrefied raw material is maximized at the time of rapid pyrolysis, and a fast heat transfer rate is achieved. In addition, the pulverized and torrefied raw material is smoothly introduced into the circulating fluidized bed rapid pyrolysis reactor.

When the torrefied raw material is subjected to a rapid pyrolysis process according to the present invention, the moisture content to be obtained in the bio-oil is lower than that of the bio-oil produced by a conventional rapid pyrolysis method and the heating value is relatively high.

According to the present invention, the waste heat generated at the time of char combustion is directly transferred to the reactor since the circulating fluidized bed rapid pyrolysis reactor is located inside the char combustor, thus the heat transfer efficiency becomes high and external heat loss becomes minimized, and as a result, the energy required for the rapid pyrolysis reaction can be decreased.

[Brief Description of Drawings]

FIG. 1 schematically illustrates a system for producing a bio-oil according to the present invention.
FIG. 2 illustrates larch sawdust raw materials torrefied under the conditions of a torrefaction temperature of 200°C to 300°C and a residence time of 10 to 60 minutes according to Experiment 1.
FIG. 3 illustrates the yields of torrefied raw materials depending on the torrefaction temperature and the residence time according to Experiment 1.
FIG. 4 illustrates the moisture contents in torrefied raw materials depending on the torrefaction temperature and the residence time according to Experiment 1 (the dotted line in FIG. 4 represents the moisture contents in raw materials which are not torrefied).
FIG. 5 illustrates the higher heating values of torrefied raw materials depending on the torrefaction temperature and the residence time according to Experiment 1 (the dotted line represents the higher heating values of raw materials which are not torrefied).
FIG. 6 illustrates the energy yields of torrefied raw materials depending on the torrefaction temperature and the residence time according to Experiment 1 (the dotted line represents the energy yields of raw materials which are not torrefied).
FIG. 7 illustrates the moisture contents in bio-oils produced by rapid pyrolysis of torrefied raw materials at the respective reaction temperatures according to Experiment 2 (the dotted line represents the moisture contents in bio-oils produced from raw materials which are not torrefied).
FIG. 8 illustrates the higher heating values of bio-oils produced by rapid pyrolysis of torrefied raw materials at the respective reaction temperatures according to Experiment 2 (the dotted line represents the higher heating values of bio-oils produced from raw materials which are not torrefied).

[Description of Embodiments]

The present invention relates to a bio-oil production method and system using torrefaction and rapid pyrolysis processes.
According to the present invention, it is possible to produce a bio-oil having a relatively low moisture content rate and a relatively high heating value as compared to a conventional technology by applying sequentially subjecting a target raw material such as biomass to torrefaction, pulverization, and rapid pyrolysis processes.
Hereinafter, the present invention will be described in more detail.
The present invention relates to a method of producing a bio-oil comprising the steps disclosed in appended claim 2.
First, the target raw material is introduced into the torrefaction apparatus and torrefied (step a).
The target raw material according to an embodiment of the present invention may be a biomass raw material of which the cell wall is mainly composed of cellulose, hemicellulose and/or lignin.
The target raw material according to another embodiment of the present invention may be sewage sludge which is a by-product generated after the treatment of domestic sewage, industrial wastewater and dirty water.
The target raw material according to another embodiment of the present invention may be a biomass raw material such as lignin generated as a by-product in one or more industries selected from the group consisting of a pulp industry, a paper industry, a biosugar plant, and a bioethanol plant.
The particle size of the biomass raw material may have a size range of about 1 to 3 mm when the target raw material is a biomass raw material. The energy required for pulverizing the biomass raw material may increase when the particle size is less than 1 mm, and uniform torrefaction cannot be proceeded when the particle size is more than 3 mm, and thus it may be disadvantageous that the raw material torrefied does not have a suitable configuration and the torrefaction time is prolonged. Moreover, the heating rate of the particles in the rapid pyrolysis reactor decreases as the particle size increases, and thus there may be a problem that the yield of bio-oil to be finally obtained decreases.
In an embodiment of the present invention, the target raw material may contain cellulose at 30% to 45% by weight, hemicellulose at 20% to 30% by weight, lignin at 10% to 35% by weight, moisture at 5% to 25% by weight, and other residues (soil, solid matter, and the like that may be contained when recovering the target raw material), and for example, it may be one or more woody biomass raw materials selected from the group consisting of sawdust, wood chips, pulp chips, waste wood and forest by-products. In an embodiment of the present invention, the woody biomass raw material may be a pine waste wood containing cellulose at 40% by weight, hemicellulose at 28.5% by weight, lignin at 27.7% by weight, moisture at 3.8% by weight and other residues or an oak waste wood containing cellulose at 41% by weight, hemicellulose at 19.2% by weight, lignin at 31.3% by weight, moisture at 8.5% by weight and other residues.

In another embodiment of the present invention, the target raw material may contain cellulose at 20% to 40% by weight, hemicellulose at 25% to 35% by weight, lignin at 10% to 35% by weight, moisture at 5% to 25% by weight and other residues (soil, solid matter, and the like that may be contained when recovering the target raw material), and for example, it may be one or more herbaceous biomass raw materials selected from the group consisting of corn stalk, palm kernel, coconut shell, nut shell, rice hull, sorghum stalk, miscanthus, phragmites, rice straw, E.F.B(Empty fruit bunch), and fallen leaves.

In an embodiment of the present invention, the herbaceous biomass raw material may be rice straw containing cellulose at 39.9% by weight, hemicellulose at 23.8% by weight, lignin at 13% by weight, moisture at 23.3% by weight and other residues, miscanthus containing cellulose at 39.8% by weight, hemicellulose at 31.5% by weight, lignin at 20.3% by weight, moisture at 8.4% by weight and other residues, phragmites containing cellulose at 40.4% by weight, hemicellulose at 27.1% by weight, lignin at 23.6% by weight, moisture at 8.9% by weight and other residues or E.F.B(Empty fruit bunch) containing cellulose at 20.8% by weight, hemicellulose at 22% by weight, lignin at 34.2% by weight, moisture at 23% by weight and other residues.

In an embodiment of the present invention, the target raw material may be sewage sludge containing carbohydrates, proteins, fats and moisture and the sewage sludge may contain carbohydrates, proteins and fats at 60% by weight or more except moisture.

In an embodiment of the present invention, the sewage sludge may be one or more sewage sludge raw materials selected from the group consisting of activated sludge, trickling filtered sludge, digested sludge, and chemical sludge.

Torrefaction is a pretreatment step of heating the target raw material at a temperature of 200°C to 300°C in an oxygen-free or low-oxygen atmosphere, and it is a process of improving the low heating value and high moisture content of a target raw material such as biomass as well as the problem of high raw material loss in the carbonization process.

The torrefaction is conducted in an oxygen-free or nitrogen atmosphere to prevent combustion of the raw material, and in a commercial scale facility, the non-condensed gas generated after pyrolysis is recycled to the torrefaction apparatus to maintain a low-oxygen atmosphere since a large amount of nitrogen is required to maintain the oxygen-free atmosphere.

Particularly, when torrefaction proceeds at a relatively low temperature of 200°C to 300°C, moisture and volatile substances present in the target raw material are removed and a part of hemicellulose is decomposed. The target raw material torrefied has an increased heating value and a decreased moisture content as compared to the target raw material before being torrefied, a large number of hydroxyl groups present in the target raw material such as biomass are removed, and thus the hydrophobicity is enhanced and long-term storage is facilitated. Moreover, the energy density is improved since the target raw material torrefied has less biomass energy loss as compared to the weight loss.

More specifically, the torrefaction process may be conducted in a temperature range of 200°C to 300°C, and still more specifically, the torrefaction process may be conducted in a temperature range of 220°C to 260°C.

There may be a problem that the removal rates of moisture and volatile substances present in the target raw material decrease when the temperature for the torrefaction process is lower than 200°C, and there may be a problem that the torrefaction yield of target raw material decreases when the temperature is higher than 300°C.

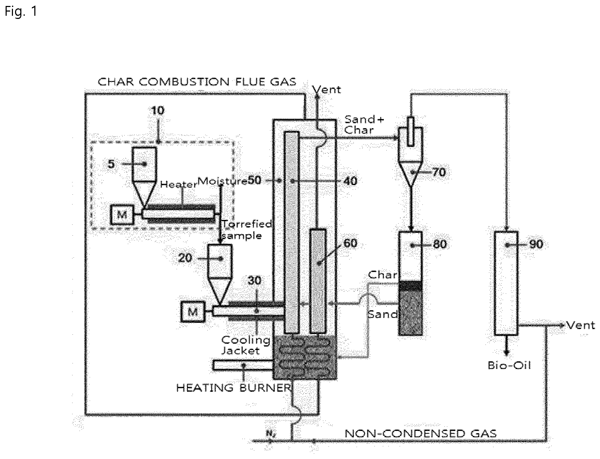

The torrefaction apparatus 10, in which the torrefaction process is conducted, may be, for example, one or more apparatuses selected from the group consisting of a rotary drum, a screw type reactor, a multiple hearth furnace (MHF), a torbed reactor, a compact moving bed (CMB) reactor, a belt dryer and a microwave reactor (See FIG. 1).

The torrefaction step is conducted for 20 to 60 minutes in the torrefaction temperature range described above, and it is preferably conducted in a state in which oxygen or air is blocked. In the torrefaction step, hemicellulose is first decomposed at a low temperature and cellulose and lignin are sequentially decomposed among the constituents of a target raw material such as biomass, but it is preferable that the torrefaction step of the present invention is conducted under optimum pyrolysis (torrefaction) conditions under which the lignin content in the target raw material such as the biomass is maximized and the energy loss can be thus minimized since cellulose composed of a carbon-hydrogen bond and lignin having a structure of an ether bond and a carbon-carbon bond have a high energy density.

Due to its unique amorphous nature, lignin has a problem that, when being fed to the rapid pyrolysis reactor through a screw feeder, it is attached to the heated screw feeder and a large amount of coke is generated. This problem can be solved by installing a cooling apparatus so that lignin is not attached to the screw feeder connected to the rapid pyrolysis reactor.

The properties of biomass as a target fuel subjected to the torrefaction step according to an embodiment of the present invention are changed from those of the existing target raw material, and it may contain cellulose at 40% to 52% by weight, hemicellulose at 3% to 19% by weight, lignin at 33% to 435% by weight, moisture at 1% to 2% by weight and other residues as the balance.

Next, the raw material torrefied in the torrefaction apparatus is pulverized in a sample pulverizer (step b).

The torrefied raw material is separated from moisture, then transferred to a sample pulverizer 20 such as a tube mill, and pulverized in the sample pulverizer. The tube mill may include a horizontally laid rotary drum type pulverizer (see FIG. 1).

The pulverized and torrefied raw material, which is obtained through the pulverization step, may have a granular form, and the particle size of fine powder form of torrefied biomass may be in a range of 0.01 to 2 mm, for example, it may have a particle size distribution in which 70% or more of the particles has a particle size of 0.1 mm or less and/or a particle size distribution in which 100% of the particles has a particle size of 0.2 mm or less.

The method includes a step of cooling the pulverized and torrefied raw material after the step b, and an effect that spontaneous ignition of the raw material is prevented is obtained by conducting the cooling step since the torrefied raw material exhibits high reactivity with oxygen.

Next, the pulverized and torrefied raw material is rapidly pyrolyzed in a circulating fluidized bed reactor (step c).

First, the torrefied raw material, which is pulverized in the sample pulverizer, is fed to the circulating fluidized bed reactor through a sample dosing apparatus (30) (see FIG. 1).

The circulating fluidized bed reactor includes a char combustor (50), a solid-gas heat exchanger (60), and a circulating fluidized bed rapid pyrolysis reactor (40) (See FIG. 1).

The char combustor (50) receives char from a particle separator (80) connected to a cyclone (70) and combusts the char using a burner located inside the combustor. The hot flue gas generated by combustion of the char is recycled to the solid-gas heat exchanger, heat exchanged with the sand which is fed into the circulating fluidized bed reactor, and then discharged to the outside of the combustor (see FIG. 1).

The solid-gas heat exchanger (60) is located inside the char combustor and can receive sand from the particle separator (80) connected to the cyclone (70) and reheat the sand (see FIG. 1).

The circulating fluidized bed reactor of the present invention uses sand, which is indirectly heated by the solid-gas heat exchanger (60), as a heat transfer medium, thus impurities such as char and ash do not enter the inside of the reactor as compared to a method in which sand is directly heated by combusting char, the quality of bio-oil is excellent, and the secondary pyrolysis reaction due to char does not proceed, and as a result, the yield of bio-oil is higher than that by the direct heating method.

The circulating fluidized bed rapid pyrolysis reactor (40) is located inside the char combustor, receives a finely pulverized and torrefied raw material from the sample dosing apparatus (30), and rapidly pyrolyzes this to generate condensed gas, non-condensed gas, and char (see FIG. 1).

The rapid pyrolysis is conducted in a temperature range of 450°C to 550°C. It may be disadvantageous that the temperature at the time of pyrolysis is lower than 400°C or higher than 700°C since the yield of the bio-oil to be finally produced is low.

The residence time of the condensed gas in the circulating fluidized bed rapid pyrolysis reactor is required to be two (2) seconds or shorter. It may be disadvantageous that the residence time is loner than 2 seconds since a secondary reaction of the condensed gas takes place.

After the rapid pyrolysis is terminated, gas, sand and char are discharged to the outside of the circulating fluidized bed reactor and the sand and char are separated from the gas by the cyclone and transferred to the particle separator. The gas separated from the sand and char is transferred to the bio-oil condenser and condensed in the condenser to obtain a bio-oil (step d).

The gas, which is not condensed in a bio-oil condenser (90), may be recycled by being fed into the circulating fluidized bed reactor or the torrefaction apparatus (see FIG. 1) .

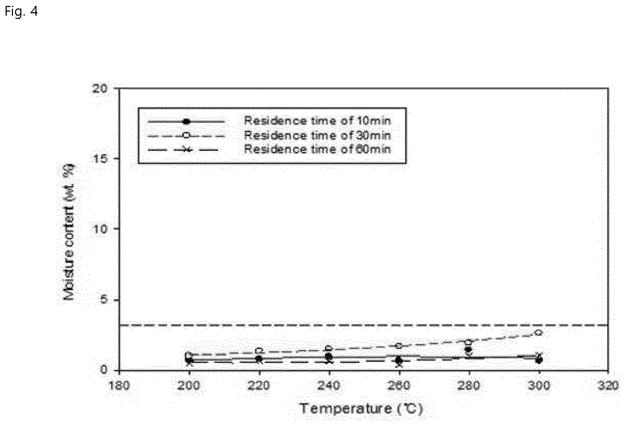

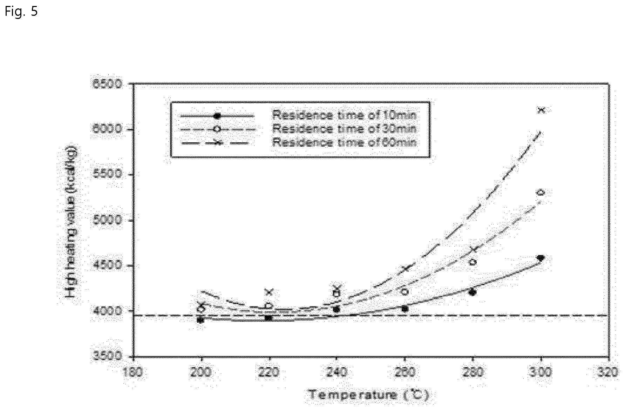

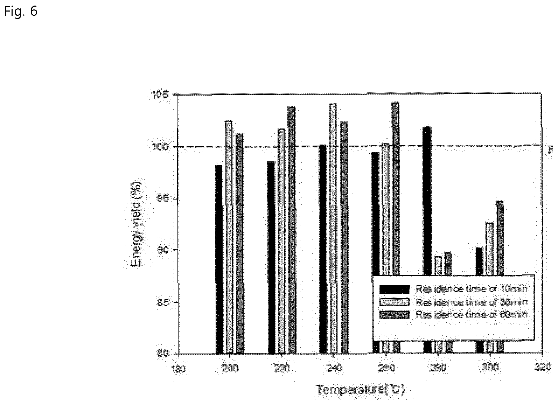

According to the method of producing a bio-oil described above, it is possible to remove moisture and volatile substances contained in the target raw material by subjecting the target raw material to a torrefaction process prior to pyrolysis, and thus the moisture content in the target raw material decreases and the heating value thereof increases as illustrated in FIG. 4 and FIG. 5. As a result, the energy density of the target raw material increases as illustrated in FIG. 6.

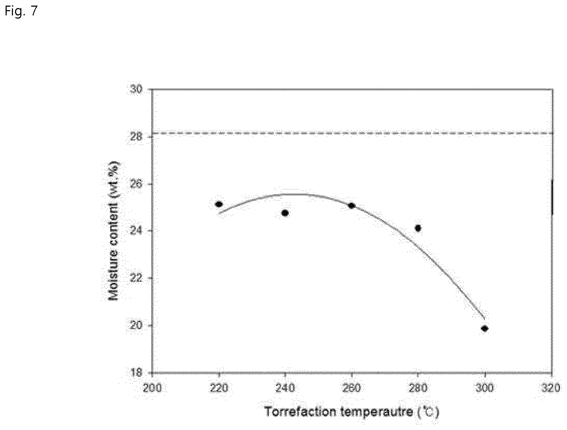

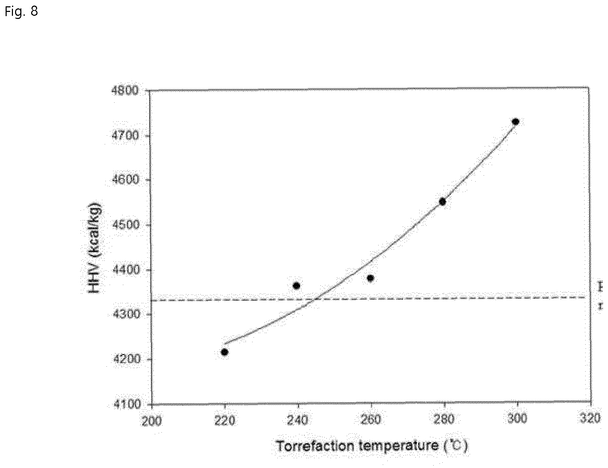

Furthermore, since the torrefied raw material can be formed into a fine powder by pulverization, and it is thus possible to maximize the reaction surface area with the combustion air at the time of rapid pyrolysis and to have a fast heat transfer rate. Moreover, the moisture content in the bio-oil to be obtained is lower than that by a conventional rapid pyrolysis method and the heating value thereof is relatively high as illustrated in FIG. 7 and FIG. 8 when the torrefied raw material is subjected to the rapid pyrolysis process according to the present invention, and thus the bio-oil is highly useful.

A series of processes described above can be conducted in a system for producing a bio-oil according to the present invention, and in an embodiment of the present invention, the system for producing a bio-oil may include a torrefaction apparatus (10) for receiving a target raw material from a sample storage tank (5) and conducting torrefaction; a sample pulverizer (20) for separating the torrefied raw material from moisture and then pulverizing the torrefied raw material into a fine powder form; a cooling apparatus (not illustrated) for cooling the pulverized and torrefied raw material;

a sample dosing apparatus (30) which introduces a torrefied raw material into a circulating fluidized bed rapid pyrolysis reactor and is equipped with a cooling apparatus for preventing pyrolysis; a circulating fluidized bed rapid pyrolysis reactor (40) for receiving the torrefied raw material and conducting a rapid pyrolysis reaction; a cyclone (70) for separating sand and char from gas among the gas, sand, and char discharged from the circulating fluidized bed rapid pyrolysis reactor; a bio-oil condenser (90) which is equipped with an electrostatic collector for collecting oil mist within the pyrolyzed gas discharged from the rapid pyrolysis reactor and condenses the collected gas to obtain a bio-oil; a particle separator (80) for feeding char from the cyclone to a char combustor and sand to a solid-gas heat exchanger; a char combustor (50) for combusting char separated by the particle separator; and a solid-gas heat exchanger (60) for reheating sand separated by the particle separator (See FIG. 1).

As described above, a general bio-oil contains a moisture rate at about 15% to 30% by weight, this moisture is mainly derived from the moisture present in the raw material and a part of this moisture is produced by the dehydration reaction of cellulose and lignin at the time of the rapid pyrolysis process. This moisture content affects the fuel properties of bio-oil so that the heating value of the bio-oil decreases and the density and viscosity thereof decrease. Particularly, it is significantly difficult to remove the moisture in the bio-oil produced by the rapid pyrolysis process by a physical method and it is thus required to decrease the moisture content in the raw material or to control the moisture content in the rapid pyrolysis process.

The torrefaction of the biomass raw material according to the present invention is a thermochemical pretreatment process of biomass to be conducted under an oxygen-free condition in a reaction temperature range of 200°C to 300°C, and approximately 70% of the mass of the biomass before being treated remains in the form of a solid product, which holds 90% of the initial energy amount, through a devolatilization reaction and a thermal decomposition reaction. Hence, the energy density of the solid product produced through the torrefaction reaction increases by about 1.3 times as compared to that of the biomass before being treated.

In addition, a target raw material such as hydrophilic biomass is converted to a hydrophobic material through torrefaction and thus exhibits lower biodegradability, improved storage property, and improved grindability due to the decomposition of hemicellulose constituting the matrix between the microfibers. The torrefied biomass can be processed into a powder form and thus exhibits fluidization and pyrolysis properties superior to those of biomass, which is not torrefied, when being fed to a fluidized bed reactor.

Hereinafter, the present invention will be described in more detail with reference to Examples and Experimental Examples. It should be understood, however, that the following Examples and Experimental Examples are given to aid understanding of the present invention and are not intended to limit the scope of the present invention thereto.

[Examples]

Experiment 1: Torrefaction of biomass raw material

For the torrefaction and rapid pyrolysis of the present invention, larch sawdust, which is a biomass raw material, was used as a target raw material.

First, the larch sawdust was dried in a dryer at a temperature of 105 ± 5°C for 24 hours in order to remove moisture therefrom. The dried larch sawdust contained moisture at 3.19% by weight, volatile matter at 78.58% by weight, fixed carbon at 17.09% by weight and ash at 1.15% by weight and the higher heating value was 3,857 kcal/kg.

A screw type reactor was used as the torrefaction apparatus, and nitrogen was supplied at 30 L/min for forming an oxygen-free condition in the reactor.

The experiment was conducted at torrefaction temperatures of 200°C, 220°C, 240°C, 260°C, 280°C and 300°C and torrefaction time of 10, 30 and 60 minutes, respectively. The target raw material filled in the sample storage tank was torrefied at the experimental condition temperature while being transported in the reactor by a rotating screw. The raw material transported during the torrefaction time was discharged to the bottom of the reactor through the outlet provided at the end of the screw reactor.

The torrefaction yield of the target raw material was calculated by measuring the weights of the raw material before and after the torrefaction and using the following equation. In Equation (1), $wi$ denotes the weight of the raw material introduced and wo denotes the weight of the raw material torrefied.

$$Yield(\%) = \frac{wo}{wi} \times 100 \qquad (1)$$

The moisture, volatile matter, ash, and fixed carbon contents in the raw material torrefied were measured according to the industrial analysis method ASTM D3172 using the TGA701 analyzer manufactured by LECO Corporation.

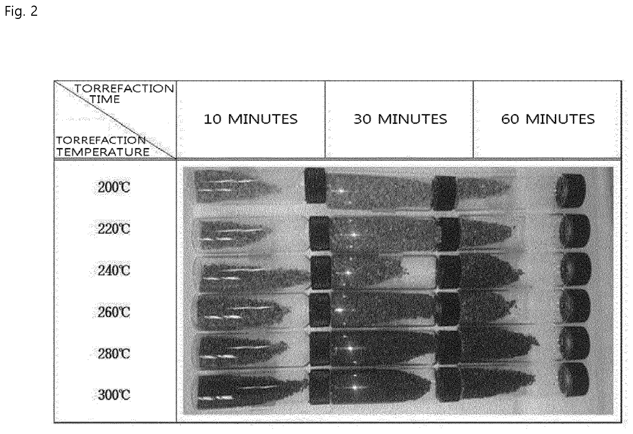

The contents of carbon, hydrogen, nitrogen, and sulfur in the raw material torrefied were measured according to ASTM D5291 using the FLASH 2000CHNS/O analyzer manufactured by Thermo Fisher Scientific. The heating value was measured according to the ASTM D5865 method using the AC600 calorimeter manufactured by LECO Corporation (see FIGS. 1 to 6).

The energy yield of the raw material torrefied was calculated using the following equation. In Equation (2), *Yield* denotes the torrefaction yield of the raw material, *HHVi* denotes the higher heating value of the raw material introduced, and *HHVo* denotes the higher heating value of the raw material torrefied (see FIGS. 1 to 6).

$$Energy\,yield(\%) = Yield \times \frac{HHVo}{HHVi} \times 100 \qquad (2)$$

Experiment 2: Rapid pyrolysis of torrefied biomass raw material

The torrefied larch sawdust raw material which was obtained in Experiment 1 and the larch sawdust raw material which was not torrefied were respectively rapidly pyrolyzed. The torrefied larch sawdust raw materials were raw materials torrefied at temperatures of 200°C, 220°C, 240°C, 260°C, 280°C and 300°C under a torrefaction time condition of 30 minutes.

A circulating fluidized bed reactor was used as the rapid pyrolysis reactor, the experiment was conducted under conditions of a rapid pyrolysis temperature of 500°C, a raw material feed rate of 16.6 g/min, and an N2 flow rate of 40 l/min (see FIGS. 7 to 8).

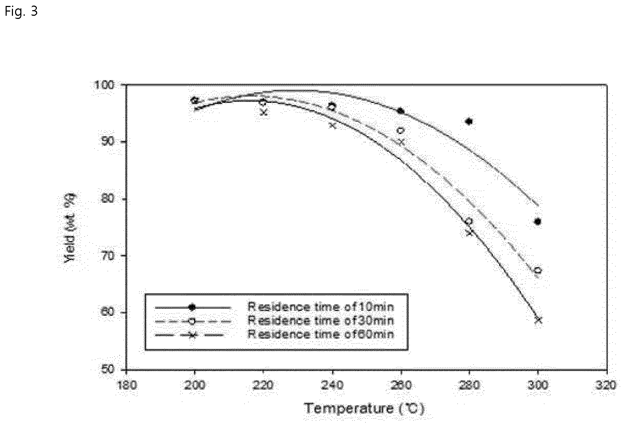

As illustrated in FIG. 3 of the present invention, the reactivity of the devolatilization reaction and pyrolysis reaction is higher as the reaction temperature is higher, and thus the yield of the raw material torrefied decreases. The yield of the raw material torrefied varies depending on the kind of biomass, the reaction temperature and the reaction time, and generally the yield is more greatly affected by the reaction temperature than the reaction time.

In addition, the moisture content in the raw material torrefied is lower than that in the existing raw material as illustrated in FIG. 4, and the volatile matter and moisture content in the raw material torrefied decrease as the reaction temperature increases. Moreover, the contents of hydrogen and oxygen contained in the raw material torrefied decrease, and as a result, the heating value of the raw material torrefied is higher than that of the existing biomass raw material and increases as the reaction temperature increases as illustrated in FIG. 5. In other words, the heating value of the raw material torrefied increases but the yield of the raw material decreases as the reaction temperature increases.

FIG. 6 illustrates the energy yields in the raw materials torrefied depending on the reaction temperature and the residence time, the energy yield is higher than that of the existing biomass raw material, and the energy yield greatly decreases at 260°C or higher. The energy yields of raw materials torrefied are highest under a reaction temperature condition of 240°C.

FIGS. 7 and 8 illustrate the moisture contents and heating values of bio-oils, which are rapidly pyrolyzed according to Experiment 2, at the respective reaction temperatures. The moisture contents in the bio-oil decreases by 8% by weight maximum and the heating value thereof increases by 400 kcal/kg maximum as compared to a case in which biomass, which is not torrefied, is rapidly pyrolyzed.

[Reference Signs List]

5: Sample storage tank
10: Torrefaction apparatus
20: Sample pulverizer
30: Sample dosing apparatus
40: Circulating fluidized bed rapid pyrolysis reactor
50: Char combustor
60: Solid-gas heat exchanger
70: Cyclone
80: Particle separator
90: Bio-oil condenser

**Claims**

1. A system for producing a bio-oil, comprising:

   a torrefaction apparatus (10) for receiving a target raw material from a sample storage tank (5) and conducting torrefaction;
   a sample pulverizer (20) for separating the torrefied raw material from moisture and then pulverizing the torrefied raw material into a fine powder form;
   a cooling apparatus for cooling the pulverized and torrefied raw material;
   a sample dosing apparatus (30) which introduces a torrefied raw material into a circulating fluidized bed fast pyrolysis reactor (40) and is equipped with a cooling apparatus for preventing pyrolysis;
   a circulating fluidized bed fast pyrolysis reactor (40) for receiving the torrefied raw material and conducting a fast pyrolysis reaction in a range of 450 to 550 °C;
   a cyclone (70) for separating sand and char from gas among the gas, sand, and char discharged from the circulating fluidized bed fast pyrolysis reactor (40);
   a bio-oil condenser (90) which is equipped with an electrostatic collector for collecting gas discharged from the fast pyrolysis reactor and condenses the collected gas to obtain a bio-oil;
   a particle separator (80) for feeding char from the cyclone to a char combustor (50) and sand to a solid-gas heat exchanger (60);
   a char combustor (50) for combusting char separated by the particle separator; and
   a solid-gas heat exchanger (60) for reheating sand separated by the particle separator;
   wherein the solid-gas heat exchanger (60) and the circulating fluidized bed rapid pyrolysis reactor (40) are located in the char combustor (50).

2. A method of producing a bio-oil using the system of claim 1, comprising:

   (a) introducing a target raw material into a torrefaction apparatus and torrefying the target raw material;
   (b1) pulverizing the torrefied raw material in a sample pulverizer;
   (b2) cooling the pulverized raw material obtained from step (b1);
   (c) rapidly pyrolyzing the cooled raw material obtained from step (b2) in a circulating fluidized bed reactor in the range of 450 to 550 °C; and
   (d) condensing a gas obtained by the fast pyrolysis to obtain a bio-oil.

3. The method of producing a bio-oil according to claim 2, wherein the target raw material is a biomass raw material containing cellulose at 30% to 45% by weight, hemicellulose at 20% to 30% by weight, lignin at 10% to 35% by weight, moisture at 5% to 25% by weight and other residues, wherein the target raw material is one or more woody biomass raw materials selected from the group consisting of sawdust, wood chips, pulp chips, waste wood and forest by-products.

4. The method of producing a bio-oil according to claim 2, wherein the target raw material is a biomass raw material containing cellulose at 20% to 40% by weight, hemicellulose at 25% to 35% by weight, lignin at 10% to 35% by weight, moisture at 5% to 25% by weight and other residues, wherein the target raw material is one or more herbaceous biomass raw materials selected from the group consisting of corn stalk, palm kernel, coconut shell, nut shell, rice hull, sorghum stalk, miscanthus, phragmites, rice straw, E.F.B(Empty fruit bunch) and fallen leaves.

5. The method of producing a bio-oil according to claim 2, wherein the target raw material is sewage sludge containing carbohydrates, proteins, fats and moisture, wherein the sewage sludge contains carbohydrates, proteins and fats at 60% by weight or more except moisture.

6. The method of producing a bio-oil according to claim 5, wherein the sewage sludge is one or more sewage sludge raw materials selected from the group consisting of activated sludge, trickling filtered sludge, digested sludge, and chemical sludge.

7. The method of producing a bio-oil according to claim 2, wherein the torrefaction in the step (a) is conducted in a temperature range of 200°C to 300°C.

8. The method of producing a bio-oil according to claim 2, wherein a particle size of the pulverized and torrefied raw material obtained in the step (b) is 0.01 to 2 mm.

9. The method of producing a bio-oil according to claim 2, wherein char and sand obtained by pyrolysis in step (c) are collected in a cyclone, and
the char collected is fed to a char combustor and the sand collected is fed to a solid-gas heat exchanger.

10. The method of producing a bio-oil according to claim 2, further comprising a step of refeeding a gas non-condensed in the step (d) to the circulating fluidized bed reactor or the torrefaction apparatus.

11. The method of producing a bio-oil according to claim 2, wherein a moisture content in the bio-oil produced is 20% by weight or less.

12. The method of producing a bio-oil according to claim 2, wherein a heating value in the bio-oil produced is 4,000 kcal/kg or more.

**Patentansprüche**

1. System zum Herstellen eines Bioöls, umfassend:

   eine Torrefizierungsvorrichtung (10) zum Empfangen eines Zielrohmaterials von einem Probenspeichertank (5) und Durchführen einer Torrefizierung;
   ein Probenpulverisator (20) zum Trennen des torrefizierten Rohmaterials von Feuchte und dann Pulverisieren des torrefizierten Rohmaterials in eine feine Pulverform;
   eine Kühlvorrichtung zum Kühlen des pulverisierten und torrefizierten Rohmaterials;
   eine Probendosiervorrichtung (30), die ein torrefiziertes Rohmaterial in einen Zirkulierende-Wirbelschicht-Schnellpyrolysereaktor (40) einführt und mit einer Kühlvorrichtung zum Verhindern von Pyrolyse ausgerüstet ist;
   ein Zirkulierende-Wirbelschicht-Schnellpyrolysereaktor (40) zum Empfangen des torrefizierten Rohmaterials und Durchführen einer Schnellpyrolysereaktion in einem Bereich von 450 bis 500 °C;
   einen Fliehkraftabscheider (70) zum Abtrennen von Sand und Kohle von Gas aus dem Gas, dem Sand und der Kohle, die von dem Zirkulierende-Wirbelschicht-Schnellpyrolysereaktor (40) ausgeschieden werden;
   einen Bioölkondensator (90), der mit einem elektrostatischen Sammler zum Sammeln von Gas, das von dem Schnellpyrolysereaktor ausgeschieden wird, ausgerüstet ist und das gesammelte Gas kondensiert, um ein Bioöl zu erhalten;
   eine Partikeltrennvorrichtung (80) zum Zuführen von Kohle von dem Fliehkraftabscheider zu einem Kohleverbrenner (50) und Zuführen von Sand zu einem Feststoff-Gas-Wärmetauscher (60);
   einen Kohleverbrenner (50) zum Verbrennen von Kohle, die von der Partikeltrennvorrichtung abgetrennt wird; und
   einen Feststoff-Gas-Wärmetauscher (60) zu Wiedererwärmen von Sand, der von der Partikeltrennvorrichtung abgetrennt wird,
   wobei der Feststoff-Gas-Wärmetauscher (60) und der Zirkulierende-Wirbelschicht-Schnellpyrolysereaktor (40) in dem Kohleverbrenner (50) angeordnet sind.

2. Verfahren zum Herstellen eines Bioöls unter Verwendung des Systems nach Anspruch 1, umfassend:

   (a) Einführen eines Zielrohmaterials in eine Torrefizierungsvorrichtung und Torrefizieren des Zielrohmaterials;
   (b1) Pulverisieren des torrefizierten Rohmaterials in einem Probenpulverisator;
   (b2) Kühlen des in Schritt (b1) erhaltenen pulverisierten Rohmaterials;
   (c) rasches Pyrolysieren des in Schritt (b2) erhaltenen abgekühlten Rohmaterials in einem Zirkulierende-Wirbelschicht-Reaktor im Bereich von 450 bis 550 °C; und
   (d) Kondensieren eines durch die rasche Pyrolyse erhaltenen Gases, um ein Bioöl zu erhalten.

3. Verfahren zum Herstellen eines Bioöls nach Anspruch 2, wobei das Zielrohmaterial ein Biomasse-Rohmaterial ist, das 30 bis 45 Gewichtsprozent Zellulose, 20 bis 30 Gewichtsprozent Hemizellulose, 10 bis 35 Gewichtsprozent Lignin, 5 bis 25 Gewichtsprozent Feuchte und andere Reststoffe enthält, wobei das Zielrohmaterial ein oder mehrere holzige Biomasse-Rohmaterialien ist, ausgewählt aus der Gruppe bestehend aus Sägemehl, Holzschnitzeln, Zellstoffschnitzeln, Abfallholz und Forstbeiprodukte.

4. Verfahren zum Herstellen eines Bioöls nach Anspruch 2, wobei das Zielrohmaterial ein Biomasse-Rohmaterial ist, das 20 bis 40 Gewichtsprozent Zellulose, 25 bis 35 Gewichtsprozent Hemizellulose, 10 bis 35 Gewichtsprozent Lignin, 5 bis 25 Gewichtsprozent Feuchte und andere Reststoffe enthält, wobei das Zielrohmaterial ein oder mehrere krautige Biomasse-Rohmaterialien ist, ausgewählt aus der Gruppe bestehend aus Maisstängel, Palmkern, Kokosnussschale, Nussschale, Reishülse, Sorghumstängel, Miscanthus, Schilfrohr, Reisstroh, EFB (leere Fruchtbündel) und gefallene Blätter.

5. Verfahren zum Herstellen eines Bioöls nach Anspruch 2, wobei das Zielrohmaterial Klärschlamm ist, der Kohlenhydrate, Proteine, Fette und Feuchte enthält, wobei der Klärschlamm mindestens 60 Trockengewichtsprozent Kohlenhydrate, Proteine und Fette enthält.

6. Verfahren zum Herstellen eines Bioöls nach Anspruch 5, wobei der Klärschlamm ein oder mehrere Klärschlamm-Rohmaterialien ist, ausgewählt aus der Gruppe bestehend aus Belebtschlamm, Tropfkörperschlamm, Faulschlamm und Chemieschlamm.

7. Verfahren zum Herstellen eines Bioöls nach Anspruch 2, wobei die Torrefizierung im Schritt (a) in einem Temperaturbereich von 200 °C bis 300 °C durchgeführt wird.

8. Verfahren zum Herstellen eines Bioöls nach Anspruch 2, wobei eine Partikelgröße des im Schritt (b) erhaltenen pulverisierten und torrefizierten Rohmaterials 0,01 bis 2mm beträgt.

9. Verfahren zum Herstellen eines Bioöls nach Anspruch 2, wobei die Kohle und der Sand, die im Schritt (c) durch Pyrolyse erhalten werden, in einem Fliehkraftabscheider gesammelt werden, und
die gesammelte Kohle einem Kohleverbrenner zugeführt wird und der gesammelte Sand einem Feststoff-Gas-Wärmetauscher zugeführt wird.

10. Verfahren zum Herstellen eines Bioöls nach Anspruch 2, weiter umfassend einen Schritt mit Wiederzuführen eines im Schritt (d) nicht kondensierten Gases an den Zirkulierende-Wirbelschicht-Reaktor oder die Torrefizierungsvorrichtung.

11. Verfahren zum Herstellen eines Bioöls nach Anspruch 2, wobei ein Feuchtegehalt in dem hergestellten Bioöl 20 Gewichtsprozent oder weniger beträgt.

12. Verfahren zum Herstellen eines Bioöls nach Anspruch 2, wobei ein Heizwert des hergestellten Bioöls 4 000 kcal/kg oder mehr beträgt.

**Revendications**

1. Système de production d'une bio-huile, comprenant un appareil de torréfaction (10) destiné à recevoir une matière première cible d'un réservoir de stockage d'échantillon (5) et à mettre en œuvre une torréfaction ;

    un pulvérisateur d'échantillon (20) destiné à séparer la matière première torréfiée de l'humidité et à pulvériser ensuite la matière première torréfiée sous forme de poudre fine ;
    un appareil de refroidissement destiné à refroidir la matière première torréfiée et pulvérisée ;
    un appareil de dosage d'échantillon (30) qui introduit une matière première torréfiée dans un réacteur de pyrolyse rapide à lit fluidisé à circulation (40) et qui est équipé d'un appareil de refroidissement destiné à empêcher une pyrolyse ;
    un réacteur de pyrolyse rapide à lit fluidisé à circulation destiné à recevoir la matière première torréfiée et à mettre en œuvre une réaction de pyrolyse rapide dans une plage de 450 à 500 °C ;
    un cyclone (70) destiné à séparer le sable et le produit de carbonisation du gaz entre le gaz, le sable et le produit de carbonisation déchargés du réacteur de pyrolyse rapide à lit fluidisé à circulation (40) ;
    un condenseur de bio-huile (90) équipé d'un collecteur électrostatique destiné à collecter le gaz déchargé à partir du réacteur de pyrolyse rapide et à condenser le gaz collecté pour obtenir une bio-huile ;
    un séparateur de particules (80) destiné à avancer le produit de carbonisation du cyclone vers une chambre de combustion de produit de carbonisation (50) et le sable vers un échangeur de chaleur solide-gaz (60);
    une chambre de combustion de produit de carbonisation (50) destinée à brûler le produit de carbonisation séparé par le séparateur de particules ; et
    un échangeur de chaleur solide-gaz (60) destiné à réchauffer le sable séparé par le séparateur de particules ;
    dans lequel l'échangeur de chaleur solide-gaz (60) et le réacteur de pyrolyse rapide à lit fluidisé à circulation (40) sont situés dans la chambre de combustion de produit de carbonisation (50).

2. Procédé de production d'une bio-huile au moyen du système selon la revendication 1, comprenant les étapes consistant à :

(a) introduire une matière première cible dans un appareil de torréfaction et torréfier la matière première cible ;
(b1) pulvériser la matière première torréfiée dans un pulvérisateur d'échantillon ;
(b2) refroidir la matière première pulvérisée obtenue à l'étape (b1) ;
(c) mettre en œuvre une pyrolyse rapide de la matière première refroidie obtenue à l'étape (b2) dans un réacteur à lit fluidisé à circulation dans la plage de 450 à 550 °C ; et
(d) condenser un gaz obtenu par la pyrolyse rapide pour obtenir une bio-huile.

3. Procédé de production d'une bio-huile selon la revendication 2, dans lequel la matière première cible est une matière première de biomasse contenant de la cellulose à 30 % à 45 % en poids, de l'hémicellulose à 20 % à 30 % en poids, de la lignine à 10 % à 35 % en poids, de l'humidité à 5 % à 25 % en poids et d'autres résidus, dans lequel la matière première cible est constituée d'une ou de plusieurs matières premières de biomasse d'origine forestière choisies dans le groupe constitué de sciure de bois, de copeaux de bois, de copeaux de papeterie, de déchets de bois et de sous-produits forestiers.

4. Procédé de production d'une bio-huile selon la revendication 2, dans lequel la matière première cible est une matière première de biomasse contenant de la cellulose à 20 % à 40 % en poids, de l'hémicellulose à 25 % à 35 % en poids, de la lignine à 10 % à 35 % en poids, de l'humidité à 5 % à 25 % en poids et d'autres résidus, dans lequel la matière première cible est constituée d'une ou de plusieurs matières premières de biomasse herbacée choisies dans le groupe constitué de tige de maïs, d'amande de palme, de coque de noix de coco, de coque de noix, de balle de riz, de tige de sorgho, de miscanthus commun, de phragmites communs, de paille de riz, de grappe de fruits vides (E.F.B., pour *Empty Fruit Bunch*) et d'effeuillures.

5. Procédé de production d'une bio-huile selon la revendication 2, dans lequel la matière première cible est de la boue d'épuration contenant des carbohydrates, des protéines, des graisses et de l'humidité, dans lequel la boue d'épuration contient des carbohydrates, des protéines et des graisses à 60 % en masse au minimum à l'exception de l'humidité.

6. Procédé de production d'une bio-huile selon la revendication 5, dans lequel la boue d'épuration est constituée d'une ou de plusieurs matières premières de boue d'épuration sélectionnées dans le groupe constitué d'une boue activée, d'une boue de lit bactérien, d'une boue digérée et d'une boue chimique.

7. Procédé de production d'une bio-huile selon la revendication 2, dans lequel la torréfaction mise en œuvre à l'étape (a) est mise en œuvre dans une plage de température de 200 °C à 300 °C.

8. Procédé de production d'une bio-huile selon la revendication 2, dans lequel une taille de particules de la matière première pulvérisée et torréfiée obtenue à l'étape (b) est comprise entre 0,01 et 2 mm.

9. Procédé de production d'une bio-huile selon la revendication 2, dans lequel le produit de carbonisation et le sable obtenus par la pyrolyse mise en œuvre à l'étape (c) sont collectés dans un cyclone, et le produit de carbonisation collecté est amené vers une chambre de combustion de produit de carbonisation et le sable collecté est amené vers un échangeur de chaleur solide-gaz.

10. Procédé de production d'une bio-huile selon la revendication 2, comprenant en outre une étape consistant à réacheminer un gaz qui n'a pas condensé à l'étape (d) vers le réacteur à lit fluidisé à circulation ou vers l'appareil de torréfaction.

11. Procédé de production d'une bio-huile selon la revendication 2, dans lequel une teneur en humidité de la bio-huile produite est inférieure ou égale à 20 % en poids.

12. Procédé de production d'une bio-huile selon la revendication 2, dans lequel une valeur de chauffe de la bio-huile produite est supérieure ou égale à 4000 kcal/kg.

Fig. 1

Fig. 2

| TORREFACTION TIME / TORREFACTION TEMPERATURE | 10 MINUTES | 30 MINUTES | 60 MINUTES |
|---|---|---|---|
| 200℃ | | | |
| 220℃ | | | |
| 240℃ | | | |
| 260℃ | | | |
| 280℃ | | | |
| 300℃ | | | |

Fig. 3

Fig. 4

Fig. 5

Fig. 6

Fig. 7

Fig. 8

**EP 3 388 498 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20130097834
- US 2010223839 A
- WO 9503374 A
- US 2010162625 A
- KR 20140068691